# DEMANDE DE BREVET EUROPEEN

(11) **EP 3 772 730 A1**
(43) Date de publication de la demande: **10.02.2021**
(21) Numéro de dépôt: 20189309.6
(22) Date de dépôt: 04.08.2020
(51) Int. Cl.: G08G 3/00, G05D 1/02, G05D 1/00

(54) **SYSTÈME, PROCÉDÉ ET DISPOSITIF D ASSISTANCE ET DE GESTION DE PLACES DE PORT**

(30) Priorité: 09.08.2019 FR 1909102
(71) Demandeur: Martin, Christophe, 77310 Saint-Fargeau-Ponthierry (FR)
(72) Inventeur: Martin, Christophe, 77310 Saint-Fargeau-Ponthierry (FR)
(74) Mandataire: Nicolle, Olivier

(57) **Abrégé**

L'invention concerne un système d'assistance et de gestion des places d'un port, comportant une station de surveillance (2) et un véhicule flottant sans pilote (3), pour le guidage d'un bateau demandeur (1) se présentant à un point d'accueil du port prédéfini et à destination d'une place de port disponible (B). Le véhicule flottant sans pilote (3) comprend des moyens de communication avec la station de surveillance, et est équipé de moyens de détection comportant au moins un capteur apte à fournir à la station de surveillance (2) des données de surveillance en temps réel du port par l'intermédiaire des moyens de communication. La station de surveillance (2) comprend un module de traitement (203) apte à déterminer une position de place de port disponible correspondant aux caractéristiques du bateau demandeur (1) ; un module de stockage pour stocker des données cartographiques représentatives des places du port ; des moyens pour transmettre au véhicule flottant sans pilote (3) une information représentative de la place de port disponible ainsi déterminée, et des instructions de déplacement dudit véhicule flottant sans pilote (3) depuis le point d'accueil prédéfini avec le bateau demandeur (1) jusqu'à la position de la place de port disponible ainsi déterminée. Chaque véhicule flottant sans pilote (3) comporte un module pour obtenir des données cartographiques représentatives du port ; des moyens pour recevoir de la station de surveillance, l'information représentative de la place de port disponible et des instructions de déplacement depuis le point d'accueil jusqu'à la position de la place de port disponible ; des moyens pour déterminer une trajectoire à suivre, d'après les données cartographiques et les instructions de déplacement reçues, pour déplacer le véhicule flottant sans pilote (3) depuis le point d'accueil jusqu'à la position de la place de port disponible ; et des moyens pour suivre automatiquement la trajectoire déterminée.

## Description

La présente invention concerne l'assistance et la gestion de places de port, le procédé associé, ainsi que la flotte de véhicules flottants associée permettant l'assistance au stationnement de bateaux en milieu portuaire.

Elle trouve une application générale dans la gestion du stationnement des bateaux en milieu portuaire, ainsi que l'assistance des bateaux lors du stationnement en milieu portuaire.

On entend par «assistance», le guidage, l'accompagnement, ainsi que toute interaction visant à assister un bateau depuis l'arrivée au port jusqu'à la confirmation de stationnement de celui-ci à la place de port attribuée.

On entend par «gestion», la surveillance, la détection des places de stationnement de port occupées et libres, ainsi que la gestion du trafic portuaire dû aux activités de stationnement.

La gestion de stationnement portuaire, et plus particulièrement des ports de plaisance, devient un enjeu majeur avec le développement croissant de l'activité maritime de plaisance. Elle inclut la gestion de l'espace de stationnement, très souvent fait manuellement, mais aussi du trafic dans les ports, lequel reste difficile à gérer, notamment lorsqu'un bateau arrivant pour stationner ne connait pas l'organisation du port et des emplacements des places de port. La gestion doit être adaptée à un nombre toujours plus grand de visites, alors que les infrastructures ne peuvent pas toujours suivre le rythme d'adaptation requis.

On connait déjà des méthodes de gestion de stationnement portuaire, ainsi que de guidage des bateaux parmi lesquelles des méthodes d'identification de l'activité portuaire, par l'intermédiaire de moyens de capture d'images installés sur le port, ou par l'utilisation de systèmes de détection fixes installés sur chaque place de stationnement du port.

On connait le document US 2016/240086 A1, décrivant un dispositif embarqué dans un bateau pour en prendre son contrôle. Il ne permet pas le guidage à distance d'un bateau demandeur sans installation préalable dudit système sur au moins un bateau demandeur.

On connait aussi le document WO2017167888A1 décrivant un véhicule flottant sans pilote apte à remorquer de manière autonome un bateau demandeur par une ligne de remorquage dans une zone portuaire. Ce système reste spatialement encombrant, non adapté à un espace portuaire limité, et difficile à manœuvrer en cas d'obstacle dans le port entre le bateau demandeur et le remorqueur autonome.

Cependant, les méthodes existantes de gestion portuaires sont souvent complexes, difficiles à mettre en place, et très onéreuses, car elles nécessitent l'installation de multiples systèmes de détection ou de capture d'image, leur nombre devant être suffisamment important pour couvrir la totalité de la zone portuaire.

Enfin, les méthodes de guidage d'un bateau se basant sur un système de gestion portuaire sont généralement effectuées manuellement, par le centre de gestion portuaire guidant le bateau arrivant au port par un moyen de communication de type VHF, ou téléphonie mobile. Ces méthodes restent relativement peu efficaces. Elles ne permettent pas une optimisation du trafic portuaire afin d'obtenir un temps suffisamment court entre l'arrivée du bateau et son stationnement. Elles ne sont pas non plus satisfaisantes au regard de la réduction de l'encombrement de l'espace de navigation portuaire, et restent de mise en œuvre difficiles pour les utilisateurs ne connaissant pas le port et les places de stationnement associées.

La présente invention améliore la situation de l'assistance et de la gestion de places de port.

Elle porte sur un système d'assistance et de gestion de places de port, comportant une station de surveillance et au moins un véhicule flottant sans pilote, pour le guidage d'au moins un bateau demandeur se présentant à un point d'accueil du port prédéfini, vers une place de port.

Selon une définition générale de l'invention,
- chaque véhicule flottant sans pilote comprend des moyens de communication avec la station de surveillance, et est équipé de moyens de détection comportant au moins un capteur apte à fournir à la station de surveillance des données de surveillance en temps réel du port par l'intermédiaire des moyens de communication ;
- la station de surveillance comprend un module de traitement apte à déterminer une position de place de port disponible correspondant aux caractéristiques du bateau demandeur ; un module de stockage pour stocker des données cartographiques représentatives des places du port ; des moyens pour transmettre au véhicule flottant sans pilote une information représentative de la place de port disponible ainsi déterminée, et des instructions de déplacement dudit véhicule flottant sans pilote depuis le point d'accueil prédéfini avec le bateau demandeur jusqu'à la position de la place de port disponible ainsi déterminée ; et
- chaque véhicule flottant sans pilote comporte un module de traitement pour obtenir des données cartographiques représentatives du port ; des moyens de stockage de données pour stocker des données cartographiques représentatives du port, des moyens de communication pour recevoir de la station de surveillance, l'information représentative de la place de port disponible et des instructions de déplacement depuis le point d'accueil jusqu'à la position de la place de port disponible, des moyens de géolocalisation pour déterminer une trajectoire à suivre, d'après les données cartographiques et les instructions de déplacement reçues, pour déplacer le véhicule flottant sans pilote depuis le point d'accueil jusqu'à proximité de la position de la place de port disponible; et des moyens de commande pour suivre automatiquement la trajectoire déterminée.

Ainsi, le système conforme à l'invention utilise astucieusement l'interaction entre une station de surveillance fixe et au moins un véhicule flottant sans pilote, pour assister et gérer les places de port au profit d'un bateau demandeur situé à un point d'accueil prédéfini. Il en résulte un stationnement optimal des bateaux dans un milieu portuaire ainsi qu'une gestion optimale du trafic et de la surveillance des bateaux demandeurs dans le port ainsi géré par le système conforme à l'invention. La surveillance est optimisée par la mobilité du véhicule flottant sans pilote, permettant ainsi une couverture visuelle complète de la zone portuaire.

De façon surprenante, l'intelligence de l'invention est située dans l'utilisation astucieuse d'une station de surveillance fixe et d'au moins un dispositif mobile de type véhicule flottant sans pilote, permettant la combinaison d'une surveillance mobile des places du port, tout en optimisant le stationnement ainsi que le trafic des bateaux demandeurs dans le port ainsi géré par guidage dudit bateau demandeur sans lien physique entre celui-ci et le véhicule flottant sans pilote.

Selon un mode de réalisation conforme à l'invention, chaque véhicule flottant sans pilote comprend en outre des moyens de surveillance comportant au moins un capteur apte à fournir à la station de surveillance des données de surveillance en temps réel du port par l'intermédiaire des moyens de communication, pour détecter les objets à proximité lors du déplacement dudit véhicule dans le port, et pour adapter la trajectoire déterminée afin de contourner les obstacles imprévus détectés.

Selon un autre mode de réalisation de l'invention, chaque véhicule flottant sans pilote comprend en outre des moyens de propulsion aptes à maintenir le véhicule flottant sans pilote dans une position fixe à proximité de la position de la place de port disponible ainsi atteinte, et des moyens de signalement pour permettre une communication entre le véhicule flottant sans pilote module et le bateau demandeur afin de lui fournir une assistance en temps réel lors des manœuvres de stationnement du bateau.

A titre d'exemple, chaque véhicule flottant sans pilote comprend en outre des moyens pour revenir automatiquement à une position de stockage une fois l'opération de stationnement correctement achevée.

Selon un mode de réalisation particulier conforme à l'invention, le système comprend en outre une station flottante de stockage des véhicules flottants sans pilote, équipée de moyens de verrouillage/déverrouillage de chaque véhicule flottant sans pilote, et des moyens de recharge de chaque véhicule flottant sans pilote.

En pratique, la station de surveillance comprend en outre un module de traitement pour analyser les données de surveillance reçues desdits moyens de surveillance du véhicule flottant sans pilote, en recherchant des différences entre des données de référence et les données de surveillance, pour détecter des informations représentatives du statut d'une place de port disponible.

En pratique, chaque véhicule flottant sans pilote du système conforme à l'invention comprend des moyens de détection appartenant au groupe formé par radar, lidar, sodar, sonar, capteur vidéo. La présente invention porte également sur un procédé d'assistance et de surveillance des places de port, mis en œuvre à l'aide d'une station de surveillance et d'au moins un véhicule flottant sans pilote, pour au moins un bateau demandeur d'une place de port se présentant à un point d'accueil du port prédéfini.

Le procédé conforme à l'invention comprend les étapes suivantes :
- au niveau de la station de surveillance :
   ∘ déterminer une position de place de port disponible correspondant aux caractéristiques du bateau demandeur ;
   ∘ stocker des données cartographiques représentatives des places du port ;
   ∘ déterminer une trajectoire à suivre, d'après les données cartographiques du port, pour déplacer le véhicule flottant sans pilote depuis le point d'accueil jusqu'à la position de la place de port disponible ;
   ∘ transmettre au véhicule flottant sans pilote une information représentative de la place de port disponible ainsi déterminée, et des instructions de déplacement dudit véhicule flottant sans pilote depuis le point d'accueil prédéfini avec le bateau demandeur jusqu'à la position de la place de port disponible ainsi déterminée ;
- au niveau de chaque véhicule flottant sans pilote :
   ∘ stocker des données cartographiques du port ;
   ∘ recevoir de la station de surveillance l'information représentative de la place de port disponible et des instructions de déplacement depuis le point d'accueil jusqu'à la position de la place de port disponible
   ∘ suivre automatiquement un itinéraire prédéterminé, d'après les données cartographiques du port, pour déplacer le véhicule flottant sans pilote depuis le point d'accueil jusqu'à la position de la place de port disponible ; et
   ∘ immobiliser le véhicule flottant sans pilote à proximité de la position de la place de port disponible ainsi atteinte, et effectuer des signalements, à l'aide des moyens de signalement, au bateau demandeur afin de fournir une assistance en temps réel lors des manœuvres de stationnement.

Selon un mode de réalisation conforme à l'invention, chaque étape d'itinérance du véhicule flottant sans pilote du procédé comprend les sous étapes suivantes :
- détecter et enregistrer des données de surveillance ;
- transmettre en temps réel les données de surveillance à la station de surveillance ; et
- traiter les données de surveillance en identifiant les objets détectés par rapport à des données de référence pour déterminer le statut d'occupation des places de stationnement du port.

Enfin, l'invention a en outre pour objet un véhicule flottant sans pilote, apte à mettre en œuvre le procédé conforme à l'invention.

Le véhicule flottant sans pilote conforme à l'invention est apte à mettre en œuvre le procédé mentionné ci-avant et comprend :
- des moyens de commande ;
- des moyens de communication aptes à établir une communication entre le véhicule flottant sans pilote et une unité de commande externe audit véhicule flottant sans pilote ;
- des moyens de propulsion aptes à permettre le déplacement du véhicule flottant sans pilote entre une position de stockage et une position d'accueil, une position d'accueil et une position de stationnement, et une position de stationnement et une position de stockage, et tout autre déplacement dans le port;

- des moyens de stabilisation ;
- des moyens de surveillance aptes à détecter la présence d'objets et enregistrer des données de surveillance de la zone environnante au véhicule flottant sans pilote, lesdites données étant communiquées à l'unité de commande par le biais des moyens de communication; et
- des moyens de signalement, permettant l'établissement d'une communication depuis l'unité de commande de la station de surveillance vers le bateau demandeur ainsi assisté.

L'utilisation d'un véhicule flottant sans pilote permet une surveillance mobile du port, ainsi qu'une identification du statut d'occupation des places de stationnement du port à partir d'un petit groupe de dispositifs, tout en permettant la fluidification du trafic du point d'accueil au stationnement effectif du bateau demandeur par assistance dudit bateau en temps réel.

D'autres avantages et caractéristiques de l'invention apparaitront à l'examen de la description et des dessins dans lesquels :
**[****Fig. 1****]** représente schématiquement le procédé conforme à l'invention ;
**[****Fig. 2****]** représente schématiquement la relation fonctionnelle entre les moyens mis en œuvre dans le procédé conforme à l'invention ;
**[****Fig. 3****]** représente schématiquement les moyens intégrés dans la station de surveillance conforme à l'invention ;
**[****Fig. 4****]** représente schématiquement les moyens intégrés dans le véhicule flottant sans pilote conforme à l'invention ;

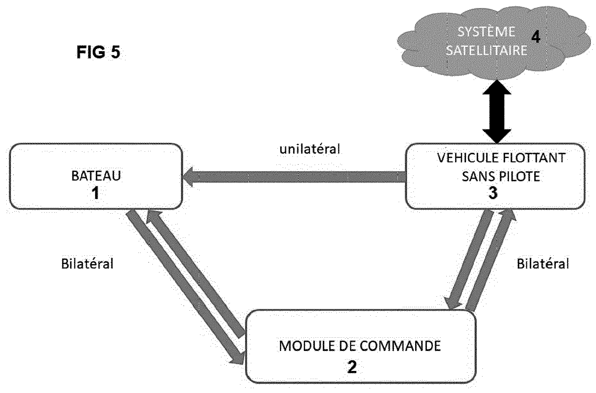

**[****Fig. 5****]** représente schématiquement les interactions de communications entre les différents moyens du système et un bateau demandeur d'une place de stationnement dans la mise en œuvre du procédé selon l'invention ;
**[****Fig. 6****]** représente schématiquement les étapes du procédé conforme à l'invention permettant l'identification du statut d'occupation d'une place de stationnement de port ;
**[****Fig. 7****]** représente schématiquement les étapes du procédé conforme à l'invention permettant le traitement de données de surveillance brutes à une identification de statut d'occupation de place de stationnement ;
**[****Fig. 8****]** représente schématiquement les mouvements du bateau demandeur, du véhicule flottant sans pilote par rapport à un port selon le procédé conforme à l'invention ;
**[****Fig. 9****]** représente schématiquement la mise en œuvre des moyens de détection du véhicule flottant sans pilote selon l'invention ;
**[****Fig. 10****]** représente schématiquement un véhicule flottant sans pilote selon l'invention ; et
**[****Fig. 11****]** représente schématiquement le verrouillage d'un véhicule flottant sans pilote à la station flottante de stockage conforme à l'invention.

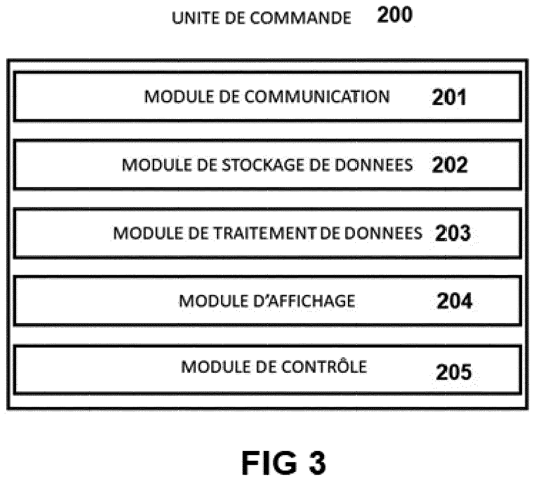

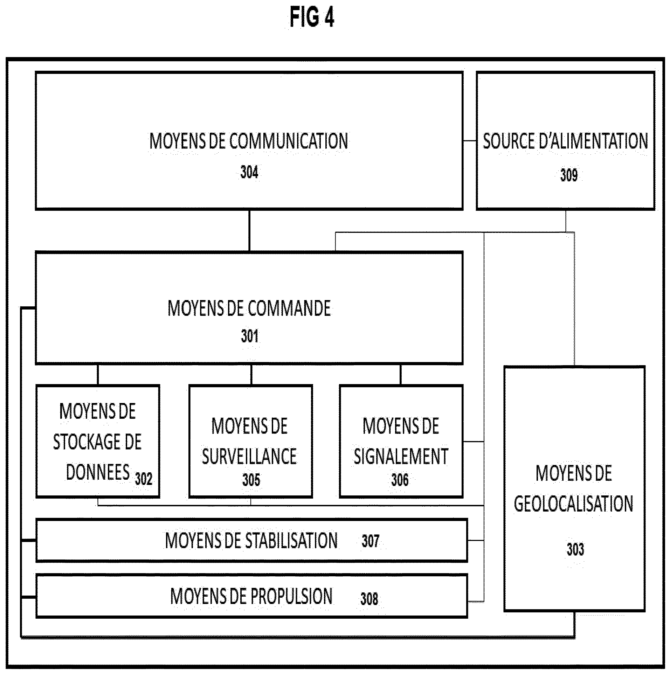

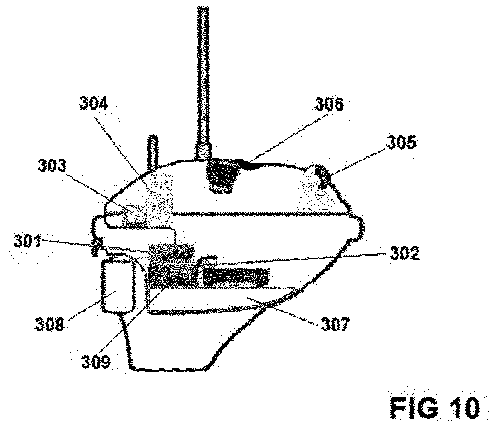

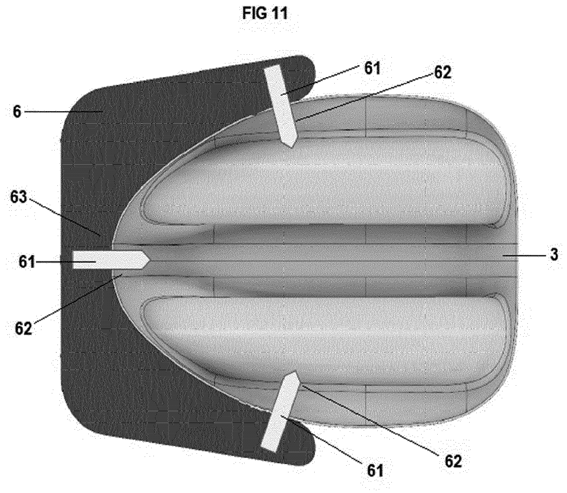

En référence aux **figures 3****,** **4****,** **10** **et** **11****,** le système d'assistance et de gestion de places de port conforme à l'invention comprend une station de surveillance 2 apte, à stocker, enregistrer, traiter et communiquer des données et instructions. La station de surveillance est généralement associée à la capitainerie du port. Elle est de préférence fixe, placée au sol ou sur une structure flottante

La station de surveillance 2 comprend une unité de commande 200 comprenant plusieurs modules pour assurer les fonctions de surveillance et d'assistance dont un module de stockage de données 202 ; un module de communication 201 ; un Module de contrôle 205 ; un module d'affichage 204 ; et un module de traitement 203 de données.

Le module de stockage 202 est apte à stocker non limitativement des données cartographiques du port, des données de statut d'occupation des places de stationnement du port, des données de surveillance en temps réel reçues d'au moins un véhicule flottant sans pilote, ainsi que des instructions de commandes afin de commander au moins un véhicule flottant sans pilote.

Le module de communication 201 intègre des moyens de communication aptes à permettre un échange de données avec au moins un véhicule flottant sans pilote 3 que l'on décrira plus en détail ci-après. Les données transmises peuvent être une information représentative de la place de port disponible déterminée par un module de traitement, des instructions de déplacement dudit véhicule flottant sans pilote 3 depuis un point d'accueil prédéfini avec le bateau demandeur 1 jusqu'à la position de la place de port disponible ainsi déterminée, ou encore des instructions de signalement aptes à signaler le bateau demandeur d'un danger ou obstacle. Les données reçues par le Module de contrôle 205 peuvent être de type données de surveillance, ou position géographique du véhicule flottant sans pilote 3.

Le module d'affichage 204 est apte à afficher les données traitées issues du module de traitement de données 203 afin de permettre une interaction homme/machine entre le Module de contrôle 205 et un utilisateur.

Le Module de contrôle 205 est apte à permettre à l'utilisateur d'interagir manuellement avec le véhicule flottant sans pilote 3, ainsi que le bateau demandeur 1 d'une place de stationnement, en envoyant des instructions ou signalements par le biais du véhicule flottant sans pilote 3.

L'unité de commande 200 de la station de surveillance 2 conforme à l'invention comprend un module de traitement 203 apte à déterminer une position de place de port disponible correspondant aux caractéristiques du bateau demandeur. Le module de traitement 203 est apte à comparer les caractéristiques du bateau demandeur 1 obtenues lors d'une première communication entre la station de surveillance 2 et le bateau demandeur 1 avec une base de données regroupant des données cartographiques du port ainsi que le statut d'occupation de chaque place de stationnement afin de déterminer une place de stationnement adéquate pour le bateau demandeur 1.

Selon un mode de réalisation de l'invention, le module de traitement 203 est apte à définir un itinéraire vers la place de stationnement déterminée afin d'optimiser le trafic portuaire. L'itinéraire déterminé comprend des points de trajectoires appelés encore «waypoints » en anglo-saxon, ou des coordonnées géographiques intermédiaires à suivre pour arriver aux coordonnées de stationnement.

Selon un mode de réalisation particulier de l'invention, le module de traitement 203 est apte à traiter des données de surveillance transmises par au moins un véhicule flottant sans pilote 3 afin de déterminer la présence/absence d'objets associés à des coordonnées géographiques particulières du port.

Le système d'assistance et de gestion de places de port comprend en outre au moins un véhicule flottant sans pilote 3, appelé encore « UFV » pour « unmanned floating vehicle » en anglo-saxon. Le véhicule 3 est apte à surveiller, se déplacer, détecter et guider un bateau demandeur dans un port. Le système permet l'accueil d'un bateau demandeur 1 d'une place de stationnement d'un point d'accueil prédéfini vers une place de stationnement, l'assistance de celui-ci ainsi que la surveillance de l'activité portuaire en temps réel.

Le véhicule flottant sans pilote 3 comprend :
- des moyens de surveillance 305 aptes à détecter et enregistrer des données de surveillance de l'environnement autour du véhicule flottant sans pilote 3 ;
- des moyens de stockage de données 302 aptes à stocker non limitativement des instructions de déplacement dudit depuis un point d'accueil A prédéfini avec le bateau demandeur 1 jusqu'à la position de la place de port disponible B ainsi déterminée, des instructions de signalement aptes à signaler le bateau demandeur 1, des données de surveillance, ou la position géographique du véhicule flottant sans pilote 3;
- des moyens de géolocalisation 303 aptes à déterminer la position géographique du véhicule flottant sans pilote 3 ;
- des moyens de communication 304 aptes à établir une communication entre le véhicule flottant sans pilote 3 et la station de surveillance 2 ;
- des moyens de propulsion 308 aptes à permettre au véhicule flottant sans pilote 3 de se déplacer selon un itinéraire déterminé, ainsi que tout autre déplacement en réponse à une commande manuelle émise par le poste de surveillance ;
- des moyens de stabilisation 307 aptes à stabiliser le véhicule flottant sans pilote 3 en phase d'arrêt ainsi qu'en phase d'itinérance afin d'optimiser la mise en œuvre de moyens de détection ;
- des moyens de signalement 306 aptes à permettre une communication unilatérale entre la station de surveillance 2 et le bateau demandeur 1 par l'intermédiaire du véhicule flottant sans pilote 3 ;
- des moyens de commande 301 aptes à mettre en œuvre les instructions reçues depuis la station de surveillance 2 ; et
- une source d'alimentation 309 apte à fournir l'énergie nécessaire au véhicule flottant sans pilote 3 pour assurer son fonctionnement.

Selon un mode de réalisation conforme à l'invention, le véhicule flottant sans pilote 3 comprend des moyens de surveillance 305 aptes à enregistrer des données de surveillance de l'environnement autour dudit véhicule 3, les dites données de surveillance étant transférées en temps réel au module de contrôle 205 du poste de surveillance 2.

En pratique, les types de moyens de surveillance 305 utilisés sur le véhicule flottant sans pilote 3 appartiennent au groupe formé par capteur vidéo, et détecteur de distance.

Les moyens de capture vidéo de type caméra permettent l'établissement et l'enregistrement d'un flux vidéo de l'environnement entourant le véhicule flottant sans pilote 3 selon un angle de prise de vue défini, le flux vidéo pouvant ensuite subir ou non un traitement particulier au niveau du module de traitement 203 du poste de surveillance 2.

A titre d'exemple, la caméra peut être de type grand angle, ou à prise de vue mobile jusqu'à un angle de 360°, la base de la caméra pouvant être rotative.

Les moyens de détections de distance appartiennent au groupe formé par les détecteurs Radar, les détecteurs Lidar, les détecteurs Sodar, et les détecteurs Sonar.

Selon un mode de réalisation particulier conforme à l'invention, le véhicule flottant sans pilote 3 comprend au moins deux types de moyens de détection.

En pratique, le véhicule flottant sans pilote 3 comprend un moyen de surveillance de type capture vidéo, et un moyen de surveillance de type détecteur de distance.

A titre d'exemple, ledit détecteur de distance peut permettre la détection des variations de profondeur sous le véhicule flottant sans pilote, et ainsi mesurer les variations de profondeur dans l'espace portuaire.

Le véhicule flottant sans pilote 3 comprend en outre des moyens de stockage de données 302 aptes à stocker non limitativement des données cartographiques du port, des données de géolocalisation du véhicule 3 déterminées par les moyens de géolocalisation 303, des instructions de déplacement dudit véhicule flottant sans pilote 3 transmises par la station de surveillance 2, des instructions de signalement au bateau demandeur 1, et des données enregistrées par les moyens de surveillance équipés.

Le véhicule flottant sans pilote 3 comprend des moyens de géolocalisation 303 aptes à déterminer la position géographique dudit véhicule 3 par géolocalisation satellitaire, et de reporter la position ainsi déterminée sur des données cartographiques de référence du port.

A titre d'exemple, les moyens de géolocalisation utilisés appartiennent au groupe formé par GPS, GALILEO, GLONASS, COMPASS.

Le véhicule flottant sans pilote 3 comprend en outre des moyens de communication 304 aptes à établir une communication avec la station de surveillance 2. L'établissement de la communication permet un échange de données bilatéral entre la station de surveillance 2 et le véhicule flottant sans pilote 3.

Selon un mode de réalisation conforme à l'invention, la communication entre la station de surveillance 2 et le véhicule flottant sans pilote 3 est de type sans fil.

Les moyens de communication 304 sans fil du véhicule flottant sans pilote 3 appartiennent non limitativement au groupe formé par Bluetooth, Wifi, et analogues.

Le véhicule flottant sans pilote 3 comprend des moyens de propulsion 308 aptes à permettre le déplacement, lesdits moyens de propulsions étant disposés de manière à ce que les parties motrices sont déportées au-dessus du niveau du véhicule 3, permettant une propulsion adéquate tout en rendant possible une rétropropulsion afin d'ajuster précisément la position du véhicule flottant sans pilote 3.

Le véhicule flottant sans pilote 3 comprend aussi des moyens de stabilisation 307 aptes à stabiliser le véhicule flottant sans pilote 3. Les moyens de stabilisation 307 comprennent au moins un système de ballastes, permettant d'éviter le retournement du véhicule flottant sans pilote 3, mais aussi optimiser la capture de données de surveillance par les moyens de surveillance 305 embarqués, ceci lors de la phase d'arrêt, ainsi qu'en phase d'itinérance.

Le véhicule flottant sans pilote 3 comprend des moyens de signalement 306 aptes à permettre l'établissement d'une communication unilatérale depuis la station de surveillance 2, vers le bateau demandeur 1 par l'intermédiaire du véhicule flottant sans pilote 3.

Selon un mode de réalisation conforme à l'invention, les moyens de signalisation comprennent un système d'émission audio de type haut-parleur, permettant à l'utilisateur de la station de surveillance 2 de pouvoir émettre des consignes sonores au bateau demandeur 1 en cas d'obstacle sur l'itinéraire de stationnement, ainsi que de guider ledit bateau demandeur 1 lors des manœuvres de stationnement, en réponse aux données de surveillance en temps réel reçues par la station de surveillance 2.

Selon un autre mode de réalisation de l'invention, le véhicule flottant sans pilote 3 comprend des moyens de signalisation visuels.

Les moyens de signalisation visuels appartiennent au groupe formé par fanion, et moyens d'émission lumineux.

Selon un mode alternatif de réalisation conforme à l'invention, le véhicule flottant sans pilote 3 comprend au moins un moyen de signalisation visuel et au moins un moyen de signalisation de type émission audio.

Le véhicule flottant sans pilote dispose de moyens de commande 301 aptes à mettre en œuvre les instructions reçues depuis la station de surveillance 2, et ainsi fonctionner selon un premier mode, dit « automatisé ».

Le mode dit « automatisé » met en œuvre au moins une série d'instructions prédéfinies en provenance de la station de surveillance 2.

Selon un second mode, dit « manuel », l'utilisateur de la station de surveillance 2 peut envoyer des instructions particulières manuellement, permettant par exemple l'évitement d'un obstacle détecté.

Le véhicule flottant sans pilote 3 comprend en outre une source d'alimentation 309 apte à fournir l'énergie nécessaire au véhicule flottant sans pilote 3 pour assurer son fonctionnement.

La source d'alimentation 309 est de type batterie rechargeable.

Selon un mode de réalisation conforme à l'invention, le véhicule flottant sans pilote 3 comprend un système de recharge sans fil de type induction mis en œuvre lors du stockage dudit véhicule 3 dans une station flottante de stockage 6.

Selon un mode de réalisation alternatif conforme à l'invention, le véhicule flottant sans pilote 3 comprend une prise de chargement filaire apte à permettre le rechargement de la source d'alimentation 309.

Le système d'assistance et de gestion de places de port comprend en outre au moins une station flottante de stockage 6.

La station flottante de stockage 6 comprend un système de recharge 63 du véhicule flottant sans pilote 3, ainsi qu'au moins un moyen de verrouillage/déverrouillage du véhicule flottant sans pilote 3.

Le véhicule flottant sans pilote 3 doit être maintenu à une faible distance de la borne de rechargement de la station flottante de stockage 6 afin d'assurer un rechargement sans fil satisfaisant.

Le véhicule flottant sans pilote 3 est donc apte à être immobilisé dans une position dite de stockage, au niveau une station flottante de stockage 6. L'immobilisation est mise en œuvre par des moyens de verrouillage/déverrouillage intégrés au véhicule flottant sans pilote 3, et comprend au moins un évidement 62 aménagé dans la coque dudit véhicule flottant sans pilote 3.

Une fois que le véhicule flottant sans pilote 3 est entré dans son emplacement de la station flottante de stockage 6, au moins un vérin linéaire actionné électriquement 61, et disposé dans la station flottante de stockage 6, se déploie et vient se verrouiller dans au moins un des évidements 62 prévus dans la coque du véhicule flottant sans pilote 3, permettant ainsi son immobilisation.

Selon un mode particulier de réalisation conforme à l'invention, la station flottante de stockage 6 comprend trois vérins linéaires actionnés électriquement 61 se déployant dans les trois évidements 62 prévus dans la coque du véhicule flottant sans pilote 3, venant ainsi verrouiller ledit véhicule 3.

Les moyens de verrouillage/déverrouillage permettent ainsi d'assurer un rechargement optimal tout en sécurisant les véhicules flottants sans pilote 3.

Avantageusement, le véhicule flottant sans pilote 3 permet de guider un bateau demandeur indépendamment de celui-ci, permettant ainsi une meilleure facilité de mouvement dans une zone portuaire comportant un espace limité tel qu'une marina, ou un port de plaisance. Il peut en outre être déployé pour n'importe quel type de bateau demandeur, et permettre une surveillance mobile en temps réel optimisée des places de port, sans nécessité de déployer un système à grande échelle.

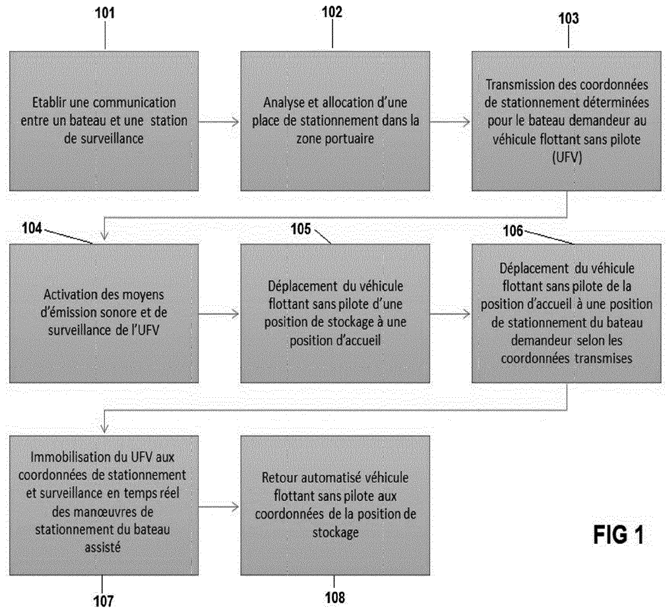

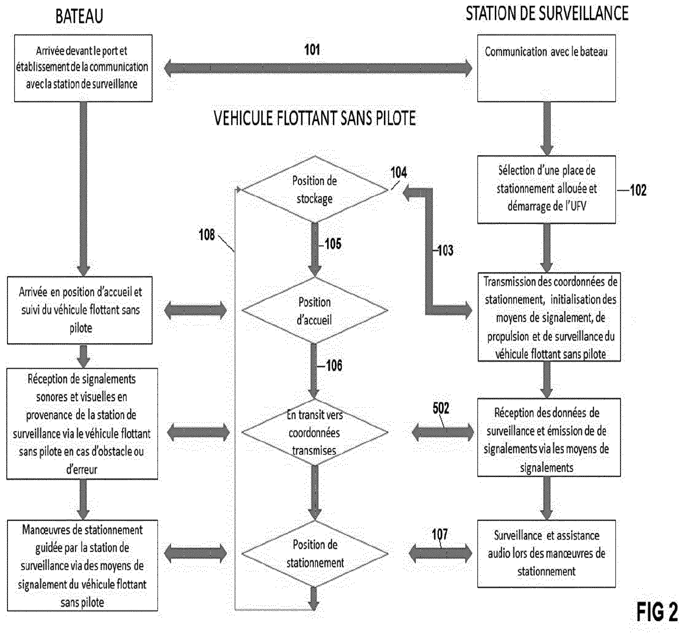

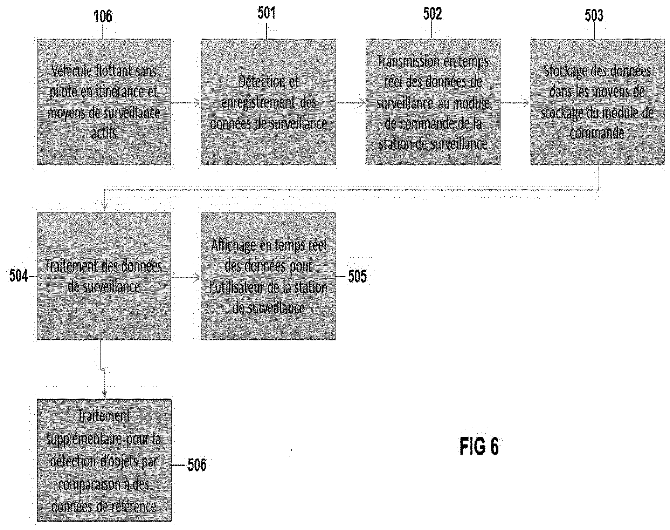

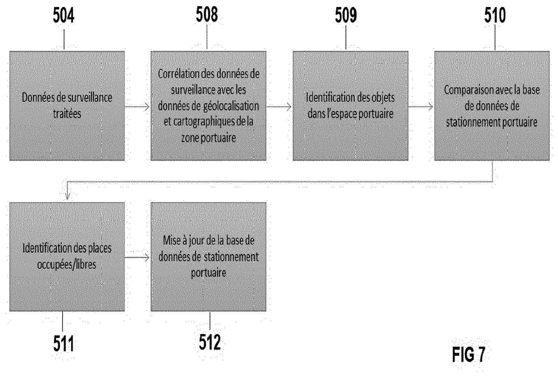

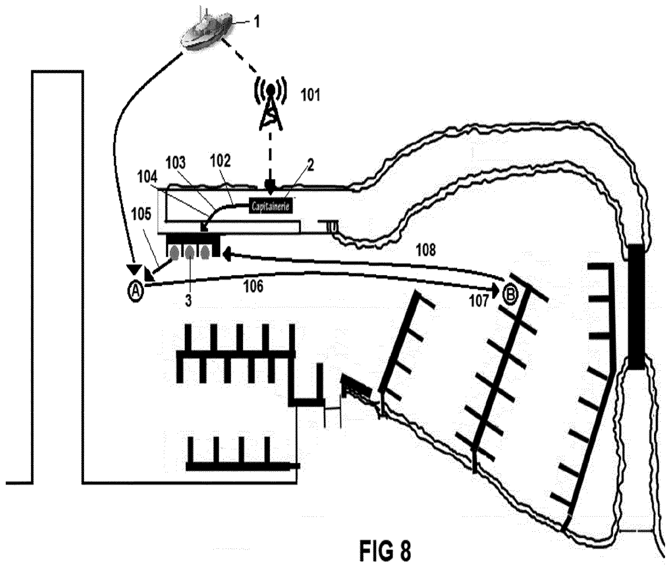

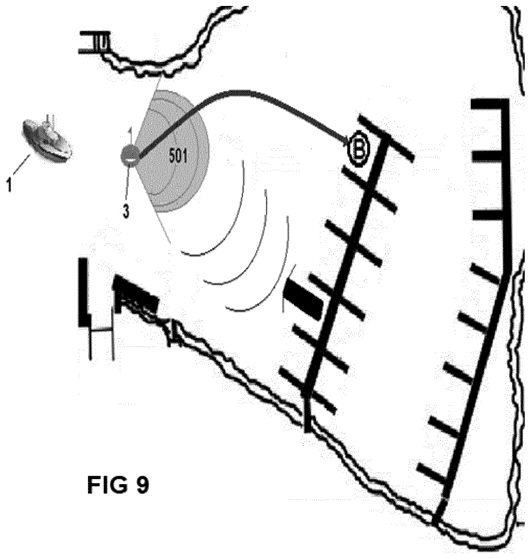

En référence aux **figures 1****,** **2****, et** **6 à 9**, on a représenté les étapes du procédé d'assistance et de surveillance des places d'un port.

Selon une étape 101, est établie une première communication entre un bateau demandeur 1 d'une place de stationnement et une station de surveillance. Cette communication peut être de type GSM, ou VHF, et permet à la station de surveillance 2 d'obtenir les caractéristiques du bateau à stationner afin de trouver la place adéquate dans le port.

A titre d'exemple, la taille du bateau influe sur la place de stationnement octroyée, les ports ayant des secteurs de stationnements particuliers en fonction de la taille des bateaux.

Selon une étape 102, en fonction des caractéristiques du bateau demandeur 1, le module de traitement 203 de la station de surveillance 2 analyse et alloue une place de stationnement conforme aux caractéristiques du bateau demandeur 1, puis détermine des coordonnées géographiques de stationnement.

Selon une étape 103, le Module de contrôle 205 de la station de surveillance 2 transmet au véhicule flottant sans pilote 3 les coordonnées de stationnement déterminées.

Selon une étape 104, les moyens de propulsion 308, de surveillance 305, et de signalement 306 du véhicule flottant sans pilote 3 sont activés.

Selon une étape 105, le véhicule flottant sans pilote 3 se déplace d'une position de stockage à une position prédéterminée A dite d'accueil afin de rejoindre le bateau demandeur 1.

Selon une étape 106, le véhicule flottant sans pilote 3 se déplace de la position d'accueil A à une position de stationnement B selon les coordonnées de stationnement ainsi que l'itinéraire transmis par la station de surveillance 2 à l'étape 105.

Selon une sous-étape 501, le véhicule flottant sans pilote 3 met en œuvre la détection d'objet et l'enregistrement des données de surveillance en temps réel lors de l'itinérance.

Selon des sous-étapes 502 et 503, les données de surveillance ainsi acquises sont transmises en temps réel au Module de contrôle 205 de la station de surveillance 2 et stockées dans le module de stockage de la station de surveillance.

Selon une sous-étape 504, les données de surveillance stockées subissent un traitement par le module de traitement 203 de données.

Selon un premier mode de réalisation le traitement des données de surveillance permet de transformer les données brutes en données compréhensibles pour l'utilisateur selon une interface homme/machine et permet selon une sous étape 505 un affichage en temps réel des données ainsi traitées. L'utilisateur établit le statut d'occupation des places de port visuellement grâce à l'interface homme/machine utilisée.

Selon un mode de réalisation alternatif, des données de surveillance traitées subissent un traitement supplémentaire permettant la détection automatique d'objets par comparaison à des données de référence selon une sous-étape 506.

Selon un premier mode de réalisation, le module de traitement 203 applique une méthode dite de Computer Vision lorsque les données de surveillance sont un flux vidéo. La méthode de Computer Vision consiste à traiter un flux vidéo par un ensemble algorithmique de type Machine Learning pré-entraîné et auto-apprenant, permettant la détection des places libres lors de l'itinérance.

Le traitement supplémentaire 506 permet de déterminer l'occupation d'une place de stationnement en recherchant des différences entre des données de référence et les données de surveillance, pour détecter des informations représentatives du statut d'une place de port disponible.

Selon un second mode de réalisation conforme à l'invention, la sous-étape de traitement supplémentaire 506 comprend les sous étapes suivantes :
- selon une sous-étape 508, corréler les données de surveillance traitées selon la sous-étape 504 avec les données de géolocalisation du véhicule flottant sans pilote 3 et les données cartographiques de référence du port ;
- selon une sous-étape 509, identifier les objets n'appartenant pas aux données cartographiques de référence ;
- selon une sous-étape 510, comparé avec la base de données de statut d'occupation des places de port ;
- selon une sous-étape 511, identifier les places ne comportant pas d'objets, et toute place ayant subi un changement d'occupation par rapport aux données de statut d'occupation ; et
- selon une sous-étape 512, mettre à jour la base de données du statut d'occupation.

On entend dans la sous-étape 508 par «données de référence », les données cartographiques du port mises à jour à intervalle choisie, décrivant la géographie du port ainsi que le statut d'occupation de chaque place de stationnement.

En pratique, le véhicule flottant sans pilote 3 dispose d'une vitesse de déplacement faible, de manière à respecter les limites réglementaires du port de stationnement tout en permettant de limiter la vitesse du bateau demandeur 1 dans le port.

A titre d'exemple, la vitesse limite peut être de deux nœuds.

Selon une étape 107, suite à l'arrivée aux coordonnées de stationnement, une immobilisation du véhicule flottant sans pilote 3 est effectuée, la position dudit véhicule flottant sans pilote 3 étant ajustée afin de permettre une surveillance en temps réel des manœuvres de stationnement du bateau demandeur 1 par la station de surveillance 2 et l'assistance de celle-ci par utilisation des moyens de signalement afin d'optimiser les manœuvres de stationnement et de réduire au maximum le temps de mise en stationnement.

Selon une étape 108, le véhicule flottant sans pilote 3 retourne de manière automatisé aux coordonnées de stockage, au niveau de la station flottante de stockage 6.

Selon une sous-étape 1081, le véhicule flottant sans pilote 3 en itinérance vers la station flottante de stockage 6 conserve les moyens de surveillance actifs afin que les données de surveillance permettent d'établir le statut d'occupation des places sur l'itinéraire parcouru.

Selon une sous-étape 1082, une fois le véhicule flottant sans pilote 3 en position de stockage, les moyens de surveillance sont configurés pour assurer une surveillance en temps réel de l'entrée du port. Une telle surveillance permet la détection de bateaux n'ayant pas établie de communication selon l'étape 101 avec la station de surveillance.

De façon surprenante, l'assistance d'un bateau demandeur 1 combinée à la surveillance mobile par le véhicule flottant sans pilote permet de réduire considérablement le temps entre l'accueil et la fin des manœuvres de stationnement tout en permettant une gestion et vérification des statuts d'occupation des places de stationnement du port sans nécessité de construire une infrastructure complexe.

## Revendications

1. Système d'assistance et de gestion des places de port, comportant une station de surveillance (2) et au moins un véhicule flottant sans pilote (3), pour guider au moins un bateau demandeur (1) se présentant à un point d'accueil (A) du port prédéfini, à destination d'une place de port choisie (B), **caractérisé en ce que** ladite station de surveillance (2) comprend :
∘ un module de traitement (203) apte à déterminer une position de place de port disponible correspondant aux caractéristiques du bateau demandeur (1) ;
∘ un module de stockage (202) pour stocker des données cartographiques représentatives des places du port ;
∘ un module de communication (201) pour transmettre au véhicule flottant sans pilote (3) une information représentative de la place de port disponible ainsi déterminée, et des instructions de déplacement dudit véhicule flottant sans pilote (3) depuis un point d'accueil prédéfini (A) avec le bateau demandeur (1) jusqu'à la position de la place de port disponible (B) ainsi déterminée ;
- **en ce que** chaque véhicule flottant sans pilote (3) comporte :
∘ un module de stockage de données (302) pour stocker des données cartographiques représentatives du port ;
∘ des moyens de communication (304) pour recevoir de la station de surveillance (2), l'information représentative de la place de port disponible (B) et des instructions de déplacement depuis le point d'accueil (A) jusqu'à la position de la place de port disponible (B) ;
∘ des moyens de géolocalisation (303) pour déterminer une trajectoire à suivre, d'après les données cartographiques et les instructions de déplacement reçues, pour déplacer le véhicule flottant sans pilote (3) depuis le point d'accueil (A) jusqu'à la position de la place de port disponible (B) ; et
∘ des moyens de commande (301) pour suivre automatiquement la trajectoire déterminée.

2. Système selon la revendication 1, **caractérisé en ce que** chaque véhicule flottant sans pilote (3) comprend en outre des moyens de surveillance (305) comportant au moins un capteur apte à fournir à la station de surveillance (2) des données de surveillance en temps réel du port par l'intermédiaire des moyens de communication (304), pour détecter les objets à proximité lors du déplacement dudit véhicule(3) dans le port, et pour adapter la trajectoire déterminée afin de contourner les obstacles imprévus détectés.

3. Système selon la revendication 1 ou 2, **caractérisé en ce que** chaque véhicule flottant sans pilote (3) comprend en outre des moyens de propulsion (308) aptes à maintenir le véhicule flottant sans pilote dans une position fixe à proximité de la position de la place de port (B) disponible ainsi atteinte, et des moyens de signalement (306) pour permettre une communication unilatérale entre le véhicule flottant sans pilote (3) et le bateau demandeur (1) afin de fournir une assistance en temps réel lors des manœuvres de stationnement du bateau (1).

4. Système selon l'une des revendications 1 à 3, **caractérisé en ce que** chaque véhicule flottant sans pilote (3) comprend en outre des moyens pour revenir automatiquement à une position de stockage une fois l'opération de stationnement correctement achevée.

5. Système selon l'une des revendications 1 à 4, **caractérisé en ce qu'**il comprend en outre une station flottante de stockage (6) des véhicules flottants sans pilote (3), équipée de moyens de verrouillage/déverrouillage (61) de chaque véhicule flottant sans pilote (3), et des moyens de recharge (63) de chaque véhicule flottant sans pilote (3).

6. Système selon l'une des revendications 1 à 5, **caractérisé en ce que** la station de surveillance (2) comprend en outre un module de traitement (203) pour analyser données de surveillance reçues desdits moyens de surveillance (305) du véhicule flottant sans pilote (3) en recherchant des différences entre des données de référence et les données de surveillance, pour détecter des informations représentatives du statut d'une place de port disponible.

7. Système selon l'une des revendications 1 à 6, **caractérisé en ce que** le véhicule flottant sans pilote (3) comprend des moyens de surveillance (305) appartenant au groupe formé par radar, lidar, sodar, sonar, capteur vidéo.

8. Procédé d'assistance et de surveillance des places d'un port, mis en œuvre à l'aide d'une station de surveillance (2) et d'au moins un véhicule flottant sans pilote (3), pour le guidage d'au moins un bateau demandeur (1) dse présentant à un point d'accueil (A) du port prédéfini et à destination d'une place de port choisie (B), **caractérisé en ce que** le procédé comprend les étapes suivantes :
- au niveau de la station de surveillance (2) :
∘ déterminer (102) une position de place de port disponible (B) correspondant aux caractéristiques du bateau demandeur (1) ;
∘ stocker des données cartographiques représentatives des places du port ;
∘ transmettre (103) au véhicule flottant sans pilote (3) une information représentative de la place de port disponible ainsi déterminée, et des instructions de déplacement dudit véhicule flottant sans pilote (3) depuis le point d'accueil (A) prédéfini avec le bateau demandeur (1) jusqu'à la position de la place de port disponible (B) ainsi déterminée ;
- au niveau de chaque véhicule flottant sans pilote (3) :
∘ stocker des données cartographiques du port ;
∘ recevoir de la station de surveillance (2) l'information représentative de la place de port disponible (B) et des instructions de déplacement depuis le point d'accueil (A) jusqu'à la position de la place de port disponible (B) ;
∘ suivre automatiquement un itinéraire prédéterminé (106), d'après les données cartographiques du port, pour déplacer le véhicule flottant sans pilote (3) depuis le point d'accueil (A) jusqu'à la position de la place de port disponible (B); et
∘ immobiliser (107) le véhicule flottant sans pilote (3) à proximité de la position de la place de port disponible (B) ainsi atteinte, et effectuer des signalements, à l'aide des moyens de signalements (306), au bateau demandeur (1) afin de fournir une assistance en temps réel lors des manœuvres de stationnement.

9. Procédé selon la revendication 8, caractérisé en chaque étape d'itinérance du véhicule flottant sans pilote (3) comprend les sous étapes suivantes :
- détecter et enregistrer (501) des données de surveillance ;
- transmettre (502) en temps réel les données de surveillance à la station de surveillance (2) ; et
- traiter (504) les données de surveillance en identifiant les objets détectés par rapport à des données de référence pour déterminer le statut d'occupation des places de stationnement du port.

10. Véhicule flottant sans pilote (3), apte à mettre en œuvre le procédé selon la revendication 8 ou la revendication 9 **caractérisé en ce qu'**il comprend :
- des moyens de communication (304) aptes à établir une communication entre le véhicule flottant sans pilote (3) et un module de commande (205) de la station de surveillance (2) ;
- des moyens de propulsion (308) aptes à permettre le déplacement du véhicule flottant sans pilote (3) entre une position d'accueil (A) et une position de stationnement (B) ;
- des moyens de surveillance (305) aptes à enregistrer des données de surveillance de la zone environnante au véhicule flottant sans pilote (3), lesdites données étant communiquées au module de commande (205) par le biais des moyens de communication (304) ; et
- des moyens de signalement (306), permettant l'établissement d'une communication depuis le module de commande (205) de la station de surveillance (2) vers un bateau assisté (1).
